# EUROPEAN PATENT SPECIFICATION

(11) **EP 0 425 194 B1**
(45) Date of publication and mention of the grant of the patent: **17.01.1996**
(21) Application number: 90311409.8
(22) Date of filing: 17.10.1990
(51) Int. Cl.: G06F 13/362

(54) **Computer system**
Rechnersystem
Système calculateur

(30) Priority: 23.10.1989 US 425765
(43) Date of publication of application: 02.05.1991
(73) Proprietor: INTERNATIONAL BUSINESS MACHINES CORPORATION, Armonk, NY 10504 (US)
(72) Inventor: Judice, Darryl Edmond, Boynton Beach, Florida 33426 (US)
(74) Representative: Burt, Roger James, Dr.

(56) References cited:
- EP-A- 0 181 007
- WO-A-88/08578
- US-A- 4 593 350
- PATENT ABSTRACTS OF JAPAN, vol. 10, no. 110 (P-450)[2167] 24th April 1986 & JP-A-60 238 962

## Description

The present invention relates in general to a computer system and in particular to a computer system for enabling a plurality of devices to manage data transfers over a main data bus with priority levels being established to ration time on the bus.

Computer systems such as those having a Micro Channel architecture (MicroChannel is a trademark of IBM Corporation), have multiple masters which can each manage data transfers over the main data bus of the system. Such masters can relieve the main processing unit (CPU) from detailed involvement in data transfers between input /output (I/O) devices and main memory and also between I/O devices. By offloading these duties the CPU is permitted to more fully concentrate its efforts on processing data and setting up transfers that other devices will execute.

In such systems, priorities are established for the respective devices on the data bus to allocate bus time. The CPU is assigned the default or residual priority recognising that the main work on the bus is desirably allocated to other devices. If a queue develops the devices including the CPU vie for the bus during each arbitration cycle and the highest in priority wins. As burst devices may continually assert a high priority, a "fairness" limitation is often used with the burst devices to force them to wait until the existing queue disappears before they may reenter the queue.

This process works well to efficiently allocate bus time unless the duty on the data bus becomes high. In that case, the CPU gets a chance on the bus infrequently, as the priority scheme permits, and then gets "bumped off" after one bus cycle if another device preempts. This situation can "lock out" the CPU to an extent that it cannot perform the preparatory setup needed for data transfers or other activity such as memory access that it requires to perform tasks. When this condition is reached the overall system performance deteriorates and, in an extreme case, there may be a system crash.

WO 88/08 578 describes an arbitration method for determining access to a bus in a computer system. A central arbiter selects a particular node and issues a conditional grant of access. Logic in the node determines whether the conditional grant from the central arbiter causes the node to become a transmitter and, if so, generates an extend bus cycle to maintain access to the bus until the transfer is completed, even though other nodes with other priorities require access to the bus.

In accordance with the present invention, there is now provided a computer system comprising a main processor having a terminate input responsive to a terminate signal for setting the processor to an inactive state, arbitration logic for connecting a main data bus to one of a plurality of master devices in response to a bus request signal and in accordance with predefined priority levels associated with the master devices wherein the processor is assigned a default priority level, characterised in that the system further comprises a pre-empt delay circuit including: detector logic for generating a selection signal in response to the arbitration logic selecting the processor, and delay logic connected between the arbitration logic and the terminate input for extending the period for which the processor is connected to the main data bus by a predetermined time upon receiving the selection signal by delaying the terminate signal sent from said arbitration logic to said terminate input of the processor.

Viewing the present invention from a second aspect, there is now provided a pre-empt delay circuit, for a computer system having a main processor which can be driven to an inactive state by a terminate signal to a terminate input and a main data bus which is allocated by arbitration logic which repeatedly selects a bus owner according to predefined priority levels as bus requests arrive among plural master devices including the main processor which is assigned a default priority level, said pre-empt delay circuit comprising: detector logic which generates a selection signal in response to the arbitration logic selecting the main processor; and delay logic connected between the arbitration logic and the terminate input for extending the period for which the processor is connected to the main data bus by a predetermined time upon receiving the selection signal by delaying the terminate signal sent from said arbitration logic to said terminate input of the processor.

In an example of the present invention to be described later, there is provided a computer system in which the response to a pre-empt is modified in the event of the CPU having the ownership of the data bus. The modification is achieved by introducing a logic controlled delay into signal lines between the arbiter and the CPU. The delay is provided without restructuring the arbitration process of the system. Furthermore, the delay is provided without changing the control bus of the system or requiring a different microprocessor such as a microprocessor with an expanded command set.

An embodiment of the present invention will now be described by way of example only with reference to the accompanying drawings in which:
Figure 1 is a block diagram of a system suitable for implementing the invention;
Figure 2 is a block diagram of a prior art signal connection between a central arbitration controller and a CPU of a system with priority arbitration;
Figure 3 is a block diagram indicating modifications to signals passed from the arbitration controller to the CPU in accordance with the present invention.
Figure 4 is a block diagram of an electrical circuit of the present invention.
Figure 5 is a timing diagram illustrating control signals for a prior art system of the kind indicated in Figure 2;
Figure 6 is a timing diagram illustrating control signals in accordance with the present invention.

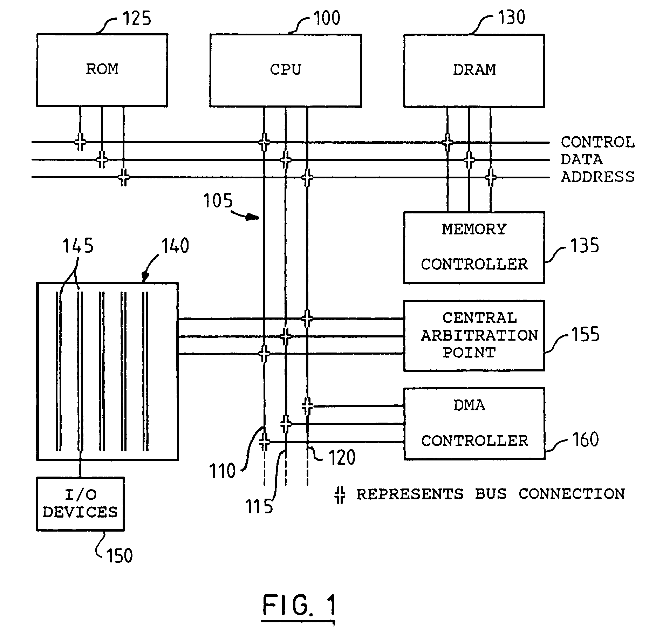

A presently preferred implementation for the invention will now be described in detail with reference to the drawings. Referring to Figure 1 a preferred system for implementing the invention includes a CPU 100, such as an Intel Corporation 80386 microprocessor, which is connected to other system elements over a set 105 of system signal busses including a control bus 110, a data bus 115 and an address bus 120. Connected to the bus set 105 are a read only memory (ROM) 125 which retains permanently resident system logic, a main memory 130, which is directly addressable read/write storage, and a memory controller 135.

In a system according to the present invention there is preferably provided a connection point 140 permitting bus interface devices 145 such as bus master devices which can control a data bus to be connected to the system bus set 105. These connections are usually made by inserting circuit boards into slots fitted with card edge connectors (indicated in edge view only in Figure 1). The interface devices 145 may connect to a variety of other devices such as input/output (I/O) devices 150. Such devices 150 may include, for example disc drives or tape units (not shown). Such a system arrangement including interface devices 145 which may be bus masters and control the data bus 115 is specified for a Micro Channel architecture (MicroChannel is a trademark of IBM Corporation) described in detail in an IBM Corporation Manual entitled "Personal System/2 Hardware Interface Technical Reference 68X2330". With such a system, a central arbitration controller 155 establishes the priority of devices taking control of the data bus 115 and a DMA controller 160 coordinates the actual transfers over such bus as is well known. A typical set of arbitration priority level assignments is illustrated at Table 1.

**TABLE 1**

| | |
|---|---|
| ARBITRATION | PRIMARY |
| LEVEL | ASSIGNMENT |
| -2 | MEMORY REFRESH |
| -1 | ERROR RECOVERY |
| 0 | DMA Port 0 |
| 1 | DMA Port 1 |
| 2 | DMA Port 2 |
| 3 | DMA Port 3 |
| 4 | DMA Port 4 |
| 5 | DMA Port 5 |
| 6 | DMA Port 6 |
| 7 | SPARE |
| 8 | SPARE |
| 9 | SPARE |
| A | SPARE |
| B | SPARE |
| C | SPARE |
| D | SPARE |
| E | SPARE |
| F | SYSTEM BOARD PROCESSOR (CPU) |

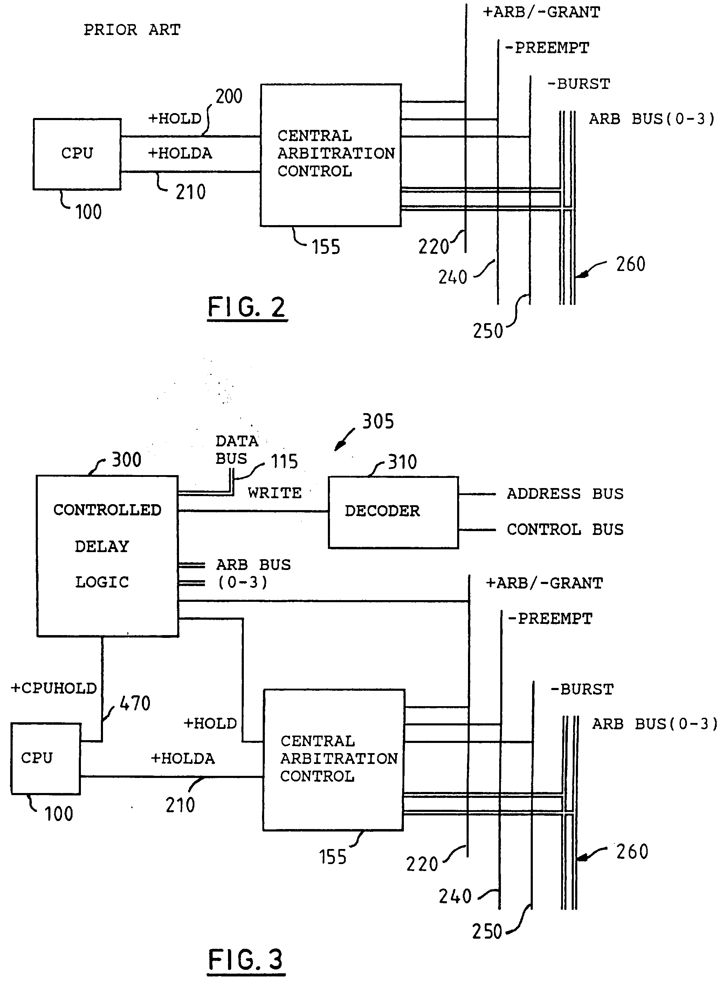

Referring now to Figure 2, the prior art includes a path 200 providing a connection between the central arbitration control 155 and the CPU 100 to carry a terminate operation signal ("HOLD") at the pin (not shown) corresponding to that signal input for the particular processor that is employed as the CPU. A path 210 is, moreover, provided to carry an acknowledge signal back to the arbitration control 155. Also indicated are channels of the control bus 110 (see Figure 1) which serve in allocating the data bus 115.

A channel 220 carries a +ARB/-GRANT signal that serves to separate periods when arbitration to establish bus ownership is occurring (ARB) and periods when ownership is fixed (GRANT) and the various masters 230 can function respective of that ownership assignment. A channel 240 serves to carry a signal -PREEMPT which indicates when one or more master devices,such as device 240 and including the CPU 100 are waiting to access the data bus 115. A channel 250 carries the -BURST signal which is asserted by a device 240 when it owns the data bus 115 to indicate whether it is a device capable of multiple or burst transfers.

Also connected to the central arbitration control 155 is an arbitration bus 260 consisting of preferably four lines (0-3) on which arbitration levels are asserted to achieve ownership of the data bus 115 and then, during the time GRANT is asserted on channel 220, to identify the owner.

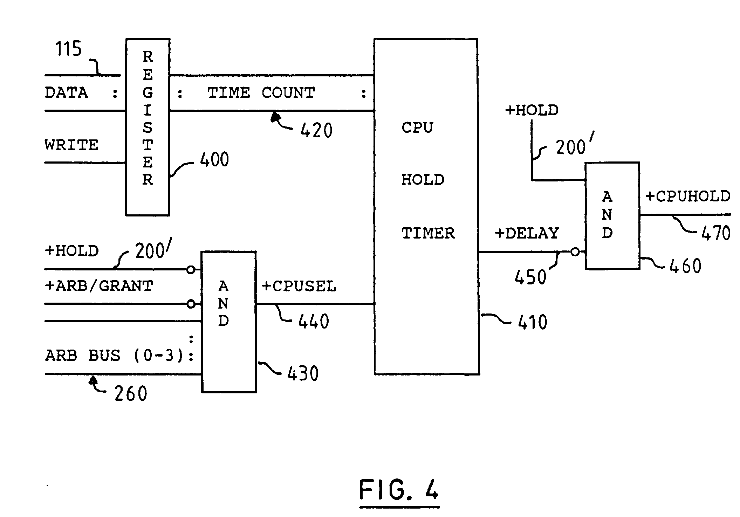

Now referring to Figure 3, the signal path 200' is directed to a logic circuit 300 of a complex 305 which according to the present invention inserts a delay and creates a modification to the HOLD signal to result in a signal +CPUHOLD which is applied at the terminate operation input point for the CPU 100. For an Intel Corporation 80386 this would be the "HOLD" pin of the PGA module. A decoder 310 provides a WRITE signal to the logic circuit 300 over line 320. It is applied to write new delay duration information into a register 400 (see Figure 4) which is supplied to a timer 410 over a bus 420.

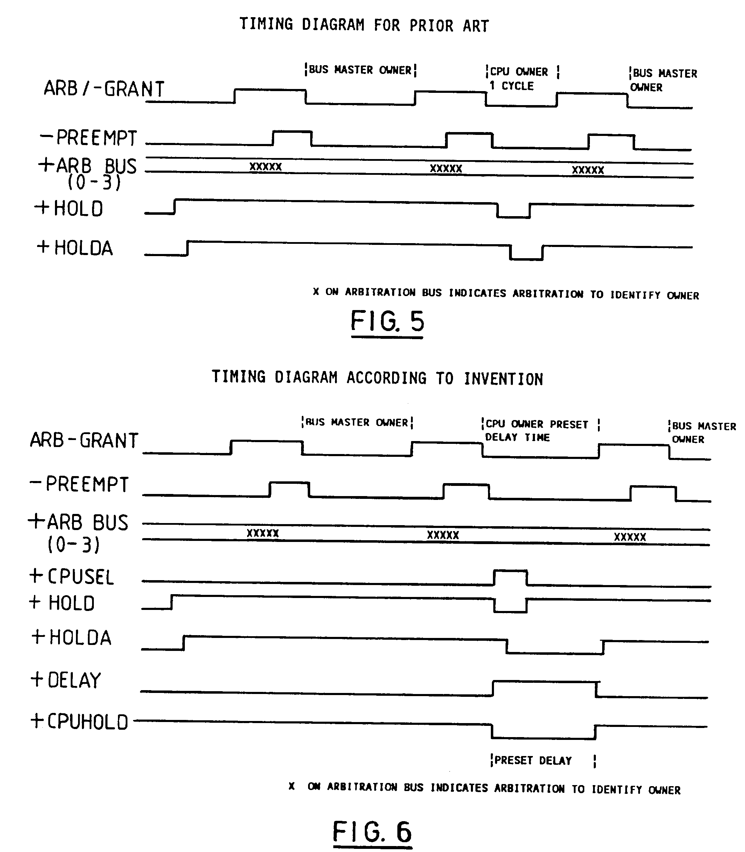

Continuing with Figure 4, an AND gate 430 is connected to receive the inverse of the +HOLD signal on line 200, the inverse of the +ARB/-GRANT signal on line 220 and the bus owner information on ARB bus 260. The output of the AND gate 430 is a signal +CPUSEL on line 440 which is applied to timer 410 to trigger a timeout for the period specified on bus 420. The signal +CPUSEL triggers the timeout signal +DELAY on line 450 in those situations when a terminate request is sent from the arbitration control and the CPU 100 owns the DATA bus 115 (-_GRANT is active and the arbitration level is 1111, hexadecimal F as indicated in Table 1 to identify the CPU). The signal +HOLD of line 200' and the inverse of the signal +DELAY are applied to an AND gate 460 to produce the signal +CPUHOLD on line 470 which applies that signal to the CPU 100 (see Figure 3). The effect of this modification of the termination signal +HOLD is readily seen by comparing the illustrative prior art timing diagram of Figure 5 with the illustrative timing diagram for the preferred implementation of Figure 6. As is indicated the CPU 100 may remain owner of the data bus 115 until the delay period expires.

## Claims

1. A computer system comprising a main processor (100) having a terminate input (200) responsive to a terminate signal for setting the processor (100) to an inactive state,
arbitration logic (155) for connecting a main data bus (115) to one of a plurality of master devices (140) in response to a bus request signal and in accordance with predefined priority levels associated with the master devices (140) wherein the processor (100) is assigned a default priority level,
characterised in that the system further comprises a pre-empt delay circuit (305) including:
detector logic (430) for generating a selection signal in response to the arbitration logic (155) selecting the processor,
and delay logic (410, 460) connected between the arbitration logic (155) and the terminate input (200) for extending the period for which the processor (100) is connected to the main data bus (115) by a predetermined time upon receiving the selection signal by delaying the terminate signal sent from said arbitration logic (155) to said terminate input (200) of the processor (100).

2. A computer system as claimed in claim 1 wherein the delay circuit (305) further comprises a register (400) for storing the predetermined time.

3. A computer system as claimed in claim 2 wherein the delay circuit (305) further comprises a decoder (310) for generating a write signal connected to the register (400) for enabling the predetermined time stored in the register (400) to be revised.

4. A computer system as claimed in any preceding claim wherein the delay logic (410, 460) comprises a timer (410) triggered by the selection signal for generating a timeout signal in response to the predetermined time elapsing.

5. A computer system as claimed in claim 4 wherein the delay logic further comprises an AND gate (460) for generating the terminate signal in response to the timeout signal and a hold signal in combination.

6. A computer system as claimed in any preceding claim wherein the detector logic (430) comprises an AND gate (430) having inputs connected to the arbitration logic (155).

7. A computer system as claimed in any preceding claim wherein the processor (100) is an 80386 processor.

8. A pre-empt delay circuit (305), for a computer system having a main processor (100) which can be driven to an inactive state by a terminate signal to a terminate input (200) and a main data bus (115) which is allocated by arbitration logic (155) which repeatedly selects a bus owner according to predefined priority levels as bus requests arrive among plural master devices (140) including the main processor which is assigned a default priority level, said pre-empt delay circuit (305) comprising:
detector logic (430) which generates a selection signal in response to the arbitration logic (155) selecting the main processor (100); and
delay logic (410, 460) connected between the arbitration logic (155) and the terminate input (200) for extending the period for which the processor (100) is connected to the main data bus (115) by a predetermined time upon receiving the selection signal by delaying the terminate signal sent from said arbitration logic (155) to said terminate input (200) of the processor (100).

## Patentansprüche

1. Ein Rechnersystem bestehend aus einem Hauptprozessor 100 mit einem auf ein Beendigungssignal reagierenden Beendigungseingang 200 zum Versetzen des Prozessors 100 in einen inaktiven Zustand, und
einer Arbiterschaltung 155 zum Verbinden eines Hauptdatenbusses 115 mit einer von mehreren Master-Einheiten 140 als Antwort auf ein Busanforderungssignal und in Übereinstimmung mit vordefinierten Prioritätsstufen, die den Master-Einheiten 140 zugeordnet sind, wobei dem Prozessor 100 eine Standardpriorität zugewiesen ist, und
wobei das System dadurch gekennzeichnet ist, daß es ferner eine vorrangige Verzögerungsschaltung 305 enthält, die aus folgenden Komponenten besteht:
einer Detektorlogik 430 zur Erzeugung eines Auswahlsignals als Antwort auf die den Prozessor auswählende Arbiterschaltung 155,
und einer zwischen die Arbiterschaltung 155 und den Beendigungseingang 200 geschalteten Verzögerungslogik 410 und 460, um die Zeitspanne, während der der Prozessor 100 mit dem Hauptdatenbus 115 verbunden ist, nach dem Empfang des Auswahlsignals um eine vorgegebene Zeitspanne zu verlängern, indem das von der Arbiterschaltung 155 an den Beendigungseingang 200 des Prozessors 100 gesendete Beendigungssignal verzögert wird.

2. Ein Rechnersystem gemäß Anspruch 1, bei dem die Verzögerungsschaltung 305 außerdem ein Register 400 zur Speicherung des vorgegebenen Zeitlimits enthält.

3. Ein Rechnersystem gemäß Anspruch 2, bei dem die Verzögerungsschaltung 305 außerdem einen an das Register 400 angeschlossenen Decoder 310 zur Erzeugung eines Schreibsignals enthält, damit das im Register 400 gespeicherte Zeitlimit korrigiert werden kann.

4. Ein Rechnersystem gemäß den vorigen Ansprüchen, bei dem die Verzögerungslogik 410 und 460 einen Taktgeber 410 enthält, der durch das Auswahlsignal ausgelöst wird, um nach Ablauf des vorgegebenen Zeitlimits ein Zeitüberschreitungssignal zu erzeugen.

5. Ein Rechnersystem gemäß Anspruch 4, bei dem die Verzögerungslogik außerdem ein UND-Glied 460 enthält, um das Beendigungssignal als Antwort auf das Zeitüberschreitungssignal zusammen mit einem Haltesignal zu erzeugen.

6. Ein Rechnersystem gemäß den vorigen Ansprüchen, bei dem die Detektorlogik 430 aus einem UND-Glied 430 besteht, dessen Eingänge an die Arbiterschaltung 155 angeschlossen sind.

7. Ein Rechnersystem gemäß den vorigen Ansprüchen, bei dem der Prozessor 100 ein 80386-Prozessor ist.

8. Eine vorrangige Verzögerungsschaltung 305 für ein Rechnersystem mit einem Hauptprozessor 100, der durch ein Beendigungssignal an einen Beendigungseingang 200 in einen inaktiven Zustand versetzt wird, und mit einem Hauptdatenbus 115, der von der Arbiterlogik 155 zugeteilt wird, die wiederholt anhand von vordefinierten Prioritätsstufen einen Buseigner auswählt, wenn Busanforderungen von mehreren Master-Einheiten 140 einschließlich des Hauptprozessors, dem eine Standardpriorität zugeordnet ist, ankommen, wobei die vorrangige Verzögerungsschaltung 305 besteht aus:
einer Detektorschaltung 430, die als Antwort auf die Auswahl des Hauptprozessors 100 durch die Arbiterschaltung 155 ein Auswahlsignal erzeugt und
einer zwischen die Arbiterschaltung 155 und den Beendigungseingang 200 geschalteten Verzögerungsschaltung 410 und 460 zur Verlängerung der Zeitspanne, in der der Prozessor 100 mit dem Hauptdatenbus 115 verbunden ist, durch ein vorgegebenes Zeitlimit nach Empfang des Auswahlsignals, indem das von der Arbiterschaltung 155 an den Beendigungseingang 200 des Prozessors 100 gesendete Beendigungssignal verzögert wird.

## Revendications

1. Système calculateur comportant un processeur principal (100) ayant une entrée de mise hors service (200) qui, en réponse à un signal d'inactivation, met le processeur (100) en état d'inactivité,
une logique d'arbitrage (155) servant à connecter un bus principal de données(115)à l'un des dispositifs directeurs (140) parmi une pluralité de dispositifs directeurs, en réponse à un signal de demande de bus et d'après des niveaux de priorité prédéfinis associés aux dispositifs directeurs (140), où un niveau de priorité par défaut est assigné au processeur (100),
caractérisé en ce que le système comprend en outre un circuit de prise de contrôle à retardement (305) incluant :
une logique de détection (430) servant à produire un signal de sélection en réponse à la sélection du processeur par la logique d'arbitrage(155),
et des logiques de retardement (410, 460) connectées entre la logique d'arbitrage (155) et l'entrée de mise hors service (200) servant à prolonger d'un temps prédéterminé la période pendant laquelle le processeur (100) est connecté au bus principal de données (115) lorsqu'elles reçoivent le signal de sélection, en retardant le signal d'arrêt envoyé par la dite logique d'arbitrage (155) à la dite entrée d'arrêt (200) du processeur (100).

2. Système calculateur tel que revendiqué dans la revendication 1 dans lequel le circuit de retardement (305) comprend en outre un registre (400) servant à enregistrer le temps prédéterminé.

3. Système calculateur tel que revendiqué dans la revendication 2 dans lequel le circuit de retardement (305) comprend en outre un décodeur (310) pour produire un signal d'écriture connecté au registre (400) afin de permettre au temps prédéterminé enregistré dans le registre (400) d'être modifié.

4. Système calculateur tel que revendiqué dans l'une quelconque des revendications précédentes dans lequel les logiques de retardement (410, 460) comprennent une horloge (410) qui, déclenchée par le signal de sélection, produit un signal de dépassement du temps imparti lorsque le temps prédéterminé est écoulé.

5. Système calculateur tel que revendiqué dans la revendication 4 dans lequel les logiques de retardement comprennent en outre une porte ET (460) pour produire ensemble le signal d'arrêt en réponse au signal de dépassement du temps imparti et un signal de maintien.

6. Système calculateur tel que revendiqué dans l'une quelconque des revendications précédentes dans lequel la logique de détection (430) comprend une porte ET (430) ayant des entrées connectées à la logique d'arbitrage (155).

7. Système calculateur tel que revendiqué dans l'une quelconque des revendications précédentes dans lequel le processeur (100) est un processeur 80386.

8. Circuit de prise de contrôle à retardement (305), pour système calculateur ayant un processeur principal (100) qui peut être amené à un état inactif par un signal d'arrêt envoyé à une entrée d'arrêt (200) et un bus principal de données (115) affecté par une logique d'arbitrage (155) qui sélectionne continuellement un occupant du bus selon les niveaux de priorité prédéfinis à mesure que les demandes de bus arrivent parmi plusieurs dispositifs directeurs (140) comprenant le processeur principal auquel est assigné un niveau de priorité par défaut, le dit circuit de prise de contrôle à retardement (305) comprenant :
une logique de détection (430) qui produit un signal de sélection lorsque la logique d'arbitrage (155) sélectionne le processeur principal (100) ; et
des logiques de retardement (410, 460) connectées entre la logique d'arbitrage (155) et l'entrée de mise hors service (200) servant à prolonger la période pendant laquelle le processeur (100) est connecté au bus principal des données (115) d'un temps prédéterminé lorsqu'elles reçoivent le signal de sélection, en retardant le signal d'arrêt envoyé par la dite logique d'arbitrage (155) à la dite entrée d'arrêt (200) du processeur (100).
